# EUROPÄISCHE PATENTSCHRIFT

(11) **EP 4 651 350 B1**
(45) Veröffentlichungstag und Bekanntmachung des Hinweises auf die Patenterteilung: **29.04.2026**
(21) Anmeldenummer: 24176731.8
(22) Anmeldetag: 17.05.2024
(51) Int. Cl.: H02K 15/33

(54) **VERFAHREN UND VORRICHTUNG ZUM SCHWEISSEN VON LEITERENDEN**
METHOD AND DEVICE FOR WELDING CONDUCTOR ENDS
PROCÉDÉ ET DISPOSITIF POUR SOUDER DES EXTRÉMITÉS DE CONDUCTEURS

(43) Veröffentlichungstag der Anmeldung: 19.11.2025
(73) Patentinhaber: Grob-Werke GmbH & Co. KG, 87719 Mindelheim (DE)
(72) Erfinder: Schmid, Valentin, 88353 Kisslegg (DE); Schürer, René, 86415 Mering (DE)
(74) Vertreter: KASTEL Patentanwälte PartG mbB

(56) Entgegenhaltungen:
- WO-A1-2020/210855
- US-A1- 2018 091 028
- US-A1- 2024 030 788

## Beschreibung

Die Erfindung betrifft ein im Zuge der Serienfertigung für ein Bauteil einer elektrischen Maschine durchzuführendes Verfahren zum Verschweißen von Leiterenden, die an dem Bauteil in einer Leiterendenanordnung angeordnet sind. Weiter betrifft die Erfindung eine Vorrichtung zum Verschweißen von Leiterenden im Zuge einer Serienfertigung für ein Bauteil einer elektrischen Maschine, wobei die Leiterenden an dem Bauteil in einer Leiterendenanordnung angeordnet sind. Weiter betrifft die Erfindung eine Steuerung sowie ein (Steuerungs-)Computerprogramm für eine solche Vorrichtung.

Verfahren und Vorrichtungen gemäß Ausführungsformen der Erfindung sollen insbesondere bei der Fertigung von Flachdrahtstatoren, insbesondere Hairpin-Statoren eingesetzt werden. Bei Hairpin-Statoren wird die Spulenwicklung aus einer Vielzahl von Haarnadel-ähnlich gebogener Leiterabschnitte (Hairpins genannt) gebildet, die zwei Schenkel mit freien Leiterenden aufweisen, die durch einen dachartig gebogenen Bereich miteinander verbunden sind. Die Hairpins werden in Statornuten eingesetzt, und anschließend wird die Spulenwicklung durch meist paarweises Verschweißen von Leiterenden gebildet. Ausführungsformen der Erfindung betreffen ein solches Verschweißen von Leiterenden und insbesondere die Detektion der Leiterenden im Zuge des Verschweißvorganges.

Zum technologischen Hintergrund wird auf folgende Literaturstellen verwiesen:
[1] EP 3 797 918 A1
[2] EP 3 865 242 B1
[3] EP 4 104 963 B1
[4] Wikipedia: Elektronenstrahl-Materialbearbeitung; heruntergeladen am 26.04.2024 unter https://de.wikipedia.org/wiki/Elektronenstrahl-Materialbearbeitung
[5] WO 2019/161846 A1
[6] WO2020/210855 A1
[7] US2024/030788 A1

Aus der Literaturstelle [1] sind ein Verfahren gemäß dem Oberbegriff von Anspruch 1 und eine Vorrichtung gemäß dem Oberbegriff von Anspruch 10 bekannt. Die Literaturstellen [2] und [3] betreffen vergleichbare Verfahren und Vorrichtungen. Die Literaturstelle [4] beschreibt Elektrodenstrahlschweißen, welches als Alternative zu den Laserschweißverfahren der Literaturstellen [1] bis [3] einsetzbar ist, wobei ein Elektrodenstrahl auch zu Positionsbestimmung herangezogen werden kann. Aus den Literaturstellen [6] und [7] sind Verfahren zum Verschweißen von Leiterenden bekannt, die eine berührungslose Positionserkennung beinhalten.

Die Erfindung hat sich zur Aufgabe gestellt, ein Verfahren und eine Vorrichtung zu schaffen, mit denen ein hinsichtlich Zuverlässigkeit und geringerem Aufwand verbessertes Verschweißen der Leiterenden ermöglicht wird.

Zum Lösen dieser Aufgabe schafft die Erfindung ein Verfahren nach Anspruch 1 sowie eine Vorrichtung nach dem Nebenanspruch 10. Eine Steuerung sowie ein Computerprogramm für eine solche Vorrichtung sind Gegenstand der Nebenansprüche 13 und 15.

Vorteilhafte Ausgestaltungen sind Gegenstand der Unteransprüche.

Die Erfindung schafft gemäß einem ersten Aspekt davon ein im Zuge der Serienfertigung für ein Bauteil einer elektrischen Maschine durchzuführendes Verfahren zum Verschweißen von Leiterenden, die an dem Bauteil in einer Leiterendenanordnung angeordnet sind, umfassend:
A) Bestimmen einer Position von vorbestimmten zu verschweißenden Leitern der Leiterendenanordnung und
B) Anordnen eines Schweißmittels abhängig von der in Schritt a) bestimmten Position an den zu verschweißenden Leiterenden;
wobei Schritt A) umfasst:
a) Durchführen einer berührungslosen Positionserkennung mit dem Ziel, die Position der zu verschweißenden Leiterenden der Leiterendenanordnung zu erfassen,
b) falls in Schritt a) die Position erfasst worden ist, Bestimmen der erfassten Position als Position für das Durchführen von Schritt B) und Speichern der erfassten Position für die vorbestimmten Leiterenden; und
c) falls in Schritt a) die Position nicht erfasst worden ist, Bestimmen der Position für das Durchführen von Schritt B) aufgrund zumindest einer zuvor für die vorbestimmten zu verschweißenden Leiterenden gespeicherten Position.

Bei einigen Ausführungsformen umfasst Schritt a) den Schritt:
a1) Durchführen einer optischen Positionserkennung.

Bei einigen Ausführungsformen umfasst Schritt a) den Schritt:
a2) Durchführen einer kamerabasierten Positionserkennung.

Bei einigen Ausführungsformen umfasst Schritt a) den Schritt:
a3) Aufnahme eines Bildes zumindest eines Teilbereichs der Leiteranordnung und Durchführen einer Bildverarbeitung zur Erfassung der Position von zu verschweißenden Leiterendengruppen.

Bei einigen Ausführungsformen umfasst Schritt a) den Schritt:
a4) Durchführen einer kamerabasierten Detektion der Position von Leiterendengruppen mittels Kantendetektion basierend auf Kontrastunterschied.

Bei einigen Ausführungsformen umfasst Schritt a) den Schritt:
a5) Aufnahme eines Kamerabildes und Suche eines trainierten Musters, insbesondere basierend auf Kontrastunterschied.

Bei einigen Ausführungsformen umfasst Schritt a) den Schritt:
a6) Durchführen einer optischen Kohärenztomografie (OCT).

Bei einigen Ausführungsformen umfasst Schritt a) den Schritt:
a7) Detektion mittels Elektronenstrahl.

Bei einigen Ausführungsformen ist vorgesehen, dass Schritt c) anstelle von Schritt b) durchgeführt wird,
- wenn in Schritt a) keine Position erfasst worden ist und/oder
- wenn eine in Schritt a) erfasste Position außerhalb eines vorbestimmten Toleranzbereichs liegt.

Bei einigen Ausführungsformen umfasst Schritt b) den Schritt:
b1) Speichern der in Schritt a) korrekt erfassten Position für jede zu verschweißende Leiterendengruppe des Bauteils.

Bei einigen Ausführungsformen umfasst Schritt b) den Schritt:
b2) Speichern der in Schritt a) für die vorbestimmte Leiterendengruppe erfassten Position bei jedem Bauteil einer Bauteilserie.

Bei einigen Ausführungsformen umfasst Schritt b) den Schritt:
b3) Speichern jeder Koordinate der in Schritt a) erfassten Position.

Bei einigen Ausführungsformen umfasst Schritt b) den Schritt:
b4) Speichern der in Schritt a) korrekt erfassten Position für nachfolgende Schweißvorgänge von weiteren Bauteilen der gleichen Serie.

Bei einigen Ausführungsformen umfasst Schritt c) den Schritt:
c1) Bilden eines Mittelwerts von bei vorherigen Schweißverfahren zum Schweißen der gleichen Leiterenden der Leiterendenanordnung anderer Bauteile der gleichen Serie gespeicherten Positionen.

Insbesondere wird hierzu der folgende Schritt durchgeführt:
c2) Bilden eines Mittelwerts für jede Koordinate der Position aus zuvor bei anderen Bauteilen der gleichen Serie für die vorbestimmten Leiterenden gespeicherten Koordinaten.

Bei einigen Ausführungsformen umfasst Schritt c) den Schritt:
c3) fortlaufendes Bilden eines Mittelwerts der Position.

In vorteilhafter Ausgestaltung geht jede neu in Schritt b) erfasste und abgespeicherte Position in eine (damit fortlaufende) Mittelwertbildung ein. Bei einigen Ausführungsformen wird ein Mittelwert nur einmalig aus einer anfänglichen Stichprobe (z.B. die ersten 30 Statoren) ermittelt. Dies ist zwar weniger bevorzugt, da z.B. Verschleiß nicht erfasst wird, aber mit geringerem laufenden Rechenaufwand verbunden und somit durchaus auch eine mögliche Lösung.

Bei einigen Ausführungsformen umfasst das Verfahren weiter den Schritt:
d) Durchführen einer optischen Existenzprüfung zum Bestimmen, ob die vorbestimmten zu verschweißenden Leiterenden vorhanden sind.

Bei einigen Ausführungsformen wird Schritt d) durchgeführt, wenn in Schritt a) die Position nicht erfasst worden ist.

Bei einigen Ausführungsformen wird Schritt d) vor Schritt c) durchgeführt.

Bei einigen Ausführungsformen umfasst Schritt d):
Erfassen nur einer Dimension einer Leiterendengruppe mit zu verschweißenden Leiterenden.

Bei einigen Ausführungsformen umfasst Schritt d):
Erfassen eines Querschnitts einer sichtbaren Fläche der Leiterenden umfasst.

Bei einigen Ausführungsformen liefert Schritt d) lediglich eine JA oder NEIN Information.

Bei einigen Ausführungsformen umfasst das Verfahren weiter den Schritt:
Aussondern des Bauteils, wenn in Schritt d) bestimmt wird, dass die zu verschweißenden Leiterenden nicht vorhanden sind.

Das Verschweißen in Schritt B) kann mit unterschiedlichen Schweißverfahren durchgeführt werden, beispielsweise Laserstrahlschweißen mit einem Laserstrahl als Schweißmittel (siehe hierzu [1] bis [3]), Elektronenstrahlschweißen mit einem Elektronenstrahl als Schweißmittel (siehe [4]) oder sonstige Schweißverfahren, z.B. mit Schweißelektroden als Schweißmittel, z.B. WIG-Schweißen.

Demgemäß umfasst Schritt B) bei einigen Ausführungsformen den Schritt:
B1) Richten eines Schweißstrahls, insbesondere Laserschweißstrahls, abhängig von der in Schritt a) bestimmten Position auf die zu verschweißenden Leiterenden.

Bei einigen Ausführungsformen umfasst Schritt B) den Schritt:
B2) Richten eines Elektronenstrahls abhängig von der in Schritt a) bestimmten Position auf die zu verschweißenden Leiterenden.

Bei einigen Ausführungsformen umfasst Schritt B) den Schritt:
B3) Anordnen wenigstens einer Elektrode zum WIG-Schweißen abhängig von der in Schritt a) bestimmten Position an den zu verschweißenden Leiterenden.

Gemäß einem weiteren Aspekt schafft die Erfindung eine Vorrichtung zum Verschweißen von Leiterenden im Zuge einer Serienfertigung für ein Bauteil einer elektrischen Maschine, wobei die Leiterenden an dem Bauteil in einer Leiterendenanordnung angeordnet sind, wobei die Vorrichtung umfasst:
eine Positionsbestimmungseinrichtung zum Bestimmen der Position von vorbestimmten zu verschweißenden Leiterenden der Leiterendenanordnung, wobei die Positionsbestimmungseinrichtung eine berührungslose Erfassungseinrichtung zum Erfassen der Position und eine computerimplementierte Auswerteinrichtung mit einem Speicher aufweist, und
eine Schweißeinrichtung, die dazu eingerichtet ist, ein Schweißmittel in Abhängigkeit von der durch die Positionsbestimmungseinrichtung bestimmten Position an den zu verschweißenden Leiterenden anzuordnen;
wobei die Auswerteinrichtung zum Durchführen der folgenden Schritte eingerichtet ist:
   a) Durchführen einer berührungslosen Positionserkennung mit dem Ziel, die Position der zu verschweißenden Leiterenden der Leiterendenanordnung zu erfassen,
   b) falls in Schritt a) die Position erfasst worden ist, Bestimmen der Position als die erfasste Position und Speichern der erfassten Position für die vorbestimmten Leiterenden; und
   c) falls in Schritt a) die Position nicht erfasst worden ist, Bestimmen der Position aufgrund zumindest einer zuvor für die vorbestimmten zu verschweißenden Leiterenden gespeicherten Position.

Bei einigen Ausführungsformen ist die berührungslose Erfassungseinrichtung eingerichtet zum Durchführen des Schritts:
a1) Durchführen einer optischen Positionserkennung.

Bei einigen Ausführungsformen ist die berührungslose Erfassungseinrichtung eingerichtet zum Durchführen des Schritts:
a2) Durchführen einer kamerabasierten Positionserkennung.

Bei einigen Ausführungsformen ist die berührungslose Erfassungseinrichtung eingerichtet zum Durchführen des Schritts:
a3) Aufnahme eines Bildes zumindest eines Teilbereichs der Leiteranordnung und Durchführen einer Bildverarbeitung zur Erfassung der Position von zu verschweißenden Leiterendengruppen.

Bei einigen Ausführungsformen ist die berührungslose Erfassungseinrichtung eingerichtet zum Durchführen des Schritts:
a4) Durchführen einer kamerabasierten Detektion der Position von Leiterendengruppen mittels Kantendetektion basierend auf Kontrastunterschied.

Bei einigen Ausführungsformen ist die berührungslose Erfassungseinrichtung eingerichtet zum Durchführen des Schritts:
a5) Aufnahme eines Kamerabildes und Suche eines trainierten Musters, insbesondere basierend auf Kontrastunterschied.

Bei einigen Ausführungsformen ist die berührungslose Erfassungseinrichtung eingerichtet zum Durchführen des Schritts:
a6) Durchführen einer optischen Kohärenztomografie (OCT).

Bei einigen Ausführungsformen ist die berührungslose Erfassungseinrichtung eingerichtet zum Durchführen des Schritts:
a7) Detektion mittels Elektronenstrahl.

Die Schweißeinrichtung weist bei einigen Ausführungsformen eine Lasereinrichtung zum Richten eines Laserschweißstrahls auf die zu verschweißenden Leiterenden auf. Die Schweißeinrichtung weist bei einigen Ausführungsformen eine Elektronenstrahlschweißeinrichtung zum Richten eines Elektronenstrahls auf die zu verschweißenden Leiterenden auf. Die Schweißeinrichtung weist bei einigen Ausführungsformen eine WIG-Schweißeinrichtung auf, die computerimplementiert dazu eingerichtet ist, wenigstens eine Elektrode abhängig von der Positionserkennung an den zu verschweißenden Leiterenden anzuordnen, umfasst.

Bei bevorzugten Ausgestaltungen ist die Auswerteinrichtung dazu eingerichtet, die Schritte des Verfahrens gemäß einer der oben erwähnten Ausgestaltungen durchzuführen.

Gemäß einem weiteren Aspekt schafft die Erfindung eine Steuerung für eine Vorrichtung nach einer der voranstehenden Ausgestaltungen, dazu eingerichtet, die Vorrichtung zum Durchführen des Verfahrens nach einer oben erwähnten Ausgestaltungen anzusteuern.

Vorzugsweise ist die Vorrichtung gemäß einer der obigen Ausgestaltungen mit einer solchen Steuerung versehen.

Gemäß einem weiteren Aspekt schafft die Erfindung ein Computerprogramm umfassend Anweisungen, die eine Vorrichtung nach einer der voranstehenden Ausgestaltungen dazu veranlassen, das Verfahren nach einer der oben erwähnten Ausgestaltungen durchzuführen.

Einige bevorzugte Ausführungsformen der Erfindung betreffen ein Laserstrahlschweißen von Hairpindrahtenden anhand mittlerer Pinkoordinaten vorheriger Bauteile nach Existenzprüfung im Falle von fehlgeschlagener Kameradetektion.

Einige Ausführungsformen von Verfahren und Vorrichtungen gemäß der Erfindung betreffen eine Detektion der Position der zu verschweißenden Drahtenden in der Fertigung von Flachdrahtstatoren (Hairpinstatoren). Beispielsweise werden Ausführungsformen der Verfahren und Vorrichtungen in einem Hairpin-Stator-Herstellverfahren und in einer Hairpin-Stator-Herstellanlage eingesetzt, wie sie in der Literaturstelle [5] beschrieben und gezeigt ist.

Bei bisherigen Schweißverfahren zum Schweißen von Leiterenden von Statoren oder dergleichen wird die Position der Leiterenden beispielsweise gemäß einer der im Folgenden wiedergegebenen Lösungsansätze detektiert:
- Kamerabasierte Detektion mittels
   ∘ Kantendetektion basierend auf Kontrastunterschied
   ∘ Suche eines trainierten Musters basierend auf Kontrastunterschied
- Optische Kohärenztomographie (OCT)
- Genereller Verzicht auf kamerabasierte Detektion = Positionierung anhand initial vorgegebener Koordinaten

Eine kamerabasierte Detektion, wie sie beispielsweise in [1] beschrieben und gezeigt ist hat sich bewährt. Jedoch können sich bei einer kamerabasierten Detektion folgende Nachteile ergeben:
- Keine der bekannten Techniken besitzt eine Detektionsrate von 100%, bestimmte Fälle können nicht erkannt werden
- Bekannte Lösung müssen bei Veränderungen in der Oberflächenbeschaffenheit/-struktur der zu detektierenden Bauteile angepasst/nachtrainiert werden
- manchmal gibt es eine falsch positive Detektion (nur vermeintlich richtig detektiert) durch Zulassen zu großer Toleranzen, um möglichst hohe Detektionsrate zu erreichen

Auch OCT-Verfahren haben sich bewährt. Jedoch können auch sie Nachteile aufweisen, wie z.B.
- eine sehr hohe Taktzeit, da jede Verbindung einzeln detektiert werden muss (im Gegensatz zu einer Kamera, die bei der Ausgestaltung von [1] mehrere Verbindungen pro Bild erfassen kann)

Bei einigen Lösungen wird ganz auf Detektion der einzelnen Leiterenden verzichtet. Auch diese Lösung hat einige Nachteile:
- Bei mechanischen Änderungen müssen die vorgegebenen Koordinaten händisch angepasst werden
- Koordinaten basieren entweder auf einmaliger Messung (keine Berücksichtigung der Variation/kein Mittelwert) oder Messaufwand steigt mit Anzahl der Messungen

Zusammengefasst gibt es bei einer positionsgenauen Verschweißung von Leiterenden von elektrischen Bauteilen, wie insbesondere bei Hairpin-Statoren folgende Herausforderungen:
- Keine der bekannten Techniken besitzt eine Detektionsrate von 100%, bestimmte Fälle können nicht erkannt werden
- Bekannte Lösungen müssen bei Veränderungen in der Oberflächenbeschaffenheit/- struktur der zu detektierenden Bauteile angepasst/nachtrainiert werden
- Inbetriebnahme-/Wartungsaufwand steigt mit zu erreichender Detektionsrate
- OCT benötigt sehr hohe Taktzeit und ist somit nur bedingt tauglich für Serienanlage mit hoher Stückzahl

Ausgestaltungen der Erfindung zielen darauf ab, das hochgenaue Verschweißen einer großen von Leiterenden bei einer Großserienproduktion von elektrischen Bauteilen zu verbessern.

Besonders bevorzugte Ausführungsformen haben zusätzlich eines oder mehrere der folgenden Zielsetzungen:
- Detektionsrate erhöhen → Ausschuss reduzieren
- Wartungsaufwand reduzieren
- Inbetriebnahmeaufwand reduzieren
- Falsch positive Detektionen und daraus resultierenden Ausschuss/Beschädigung der Werkzeuge reduzieren

Besonders bevorzugte Ausführungsformen der Erfindung erfüllen eine, mehrere oder alle der folgenden Anforderungen:
- Erscheinung/Oberfläche der zu detektierenden Drahtenden streut stark/kann sich über Zeit verändern → Anforderung: ein existenzprüfender Ansatz, die alle Fälle/Projekte abdeckt (mit bisherigen Lösungen sehr schwierig)
- Taktzeitanforderungen
- Inbetriebnahme und Wartungsaufwand müssen gering sein
- Idealer Weise keine zusätzlichen Kosten für Software/Sensorik

Die Lösung besonders bevorzugter Ausführungsformen der Erfindung setzt nach den bereits bekannten Lösungen (siehe [1] bis [3]) an/baut auf sie auf, indem sie kamerabasierte Detektion mit Positionierung ohne Detektion kombiniert. Bei einigen Ausführungsformen werden die Koordinaten als "OK" detektierter Bauteile/Drahtenden gespeichert und Mittelwerte für die jeweiligen Positionen berechnet. NOK-Detektionen (NOK = nicht in Ordnung) werden automatisch verworfen. Bei einigen Ausführungsformen wird im Falle einer fehlgeschlagenen Detektion (Kamera/OCT/oder auch Erfassung mit Elektronenstrahl bei Elektronenstrahlschweißen, siehe [4]) auf neu detektierte Koordinaten verzichtet und der Schweißprozess anhand der gespeicherten Mittelwerte positioniert (=Blindschweißung). So kann eine "Detektionsrate" (Schweißrate) von 100% erreicht werden. Optional kann nach fehlgeschlagener Detektion und vor der Blindschweißung noch eine Existenzprüfung durchgeführt werden. Die Existenzprüfung verhindert ein Auslösen des Schweißprozesses bei nicht vorhanden Sein beider Leiterenden und somit eine mögliche Beschädigung einer Spannvorrichtung (die bei einigen Ausführungsformen zum Spannen der Leiter eingesetzt wird). Dafür wird das bestehende berührungslose Erfassungssystem wie z.B. Kamerasystem/OCT/Elektronenstrahlrasterung verwendet. Anstelle einer regulären kontrastbasierten Kantendetektion, die z.B. alle vier Pinpaarseiten und damit beide Dimensionen überprüft, wird bei einigen Ausführungsformen nur eine Dimension, z.B. die Pinpaarbreite überprüft, um sicherzustellen, dass beide Drahtenden vorhanden sind. Alternativ kann auch nur der Querschnitt der sichtbaren Schnittfläche überprüft werden oder ähnliches. Diese Existenzprüfung ist simpler als eine Detektion, da sie z.B. auf eine Dimension verzichtet und keinen Zahlenwert (Position) liefern sollte, sondern nur eine vorhanden JA/NEIN Aussage. Dadurch ist die Gefahr einer falsch positiven Bewertung geringer und der Inbetriebnahme-/Wartungsaufwand geringer. Selbst im Falle einer falsch positiven Existenzkontrolle würde zumindest die Platzierung der Schweißung korrekt erfolgen, da diese anhand der Mittelwerte erfolgt. Außerdem können mehrere Existenzprüfungen nacheinander getriggert werden, bis ein Ansatz die Existenz nachweisen konnte.

Die Taktzeit des Gesamtsystems erhöht sich nicht (ohne Existenzcheck) oder nur marginal (mit Existenzcheck) gegenüber einer klassischen kamerabasierten Detektion, da die Blindschweißung nur selten zum Einsatz kommt.

Bevorzugte Ausgestaltungen der Erfindung vereinen das Beste aus beiden bekannten Ansätzen (Detektieren oder ganz auf Detektion verzichten): Die Genauigkeit der Positionierung der Schweißgeometrie ist vergleichbar mit einem Ansatz, der nur nach OK Detektion schweißt, da nur in wenigen Fällen blind geschweißt wird. Außerdem kommt es auch bei Schweißen nur nach Detektion zu falsch positiven Detektionen (v.a. in kritischen Fällen), beim Blindschweißen kann diese Art der Fehlpositionierung aufgrund des Bildens von Mittelwerten vermieden werden. Dadurch kann die Positioniergenauigkeit im Gesamten sogar steigen, obwohl teilweise auf Detektion verzichtet wird. Daher ist es sinnvoll, in Grenzfällen eher blind zu schweißen als die vermeintliche Detektion durch Öffnen der Toleranzen zu erzwingen.

Auf der anderen Seite hat der bisherige Ansatz eines generellen Verzichts auf Detektion den Nachteil, dass graduelle Änderungen der Pinpositionen über Zeit oder durch mechanische Anpassungen nicht (automatisch) berücksichtigt werden und die Schweißqualität irgendwann sinkt. Anpassung der hinterlegten Koordinaten kostet Zeit und erfordert händisches Messen/zeitweise Integration eines Kamera-/Messsystems. Dieser Nachteil wird durch Ausführungsformen der Erfindung vermieden.

Ausführungsbeispiele werden im Folgenden anhand der beigefügten Zeichnungen näher erläutert. Darin zeigt:
- Fig. 1: eine schematische Darstellung einer ersten Ausführungsform einer Vorrichtung zum Verschweißen von Leiterenden;
- Fig. 2: eine schematische Darstellung einer zweiten Ausführungsform einer Vorrichtung zum Verschweißen von Leiterenden;
- Fig. 3: ein Ablaufdiagramm einer Ausführungsform eines Verfahrens zum Verschweißen von Leiterenden;
- Fig. 4: eine schematische Darstellung eines Leiterendenpaars bei einer Ausführungsform einer berührungslosen Positionserkennung;
- Fig. 5: eine schematische Darstellung eines Leiterendenpaars bei einer ersten Ausführungsform einer optionalen Existenzprüfung in dem Verfahren von Fig. 3; und
- Fig. 6: eine schematische Darstellung eines Leiterendenpaars bei einer zweiten Ausführungsform einer optionalen Existenzprüfung in dem Verfahren von Fig. 3.

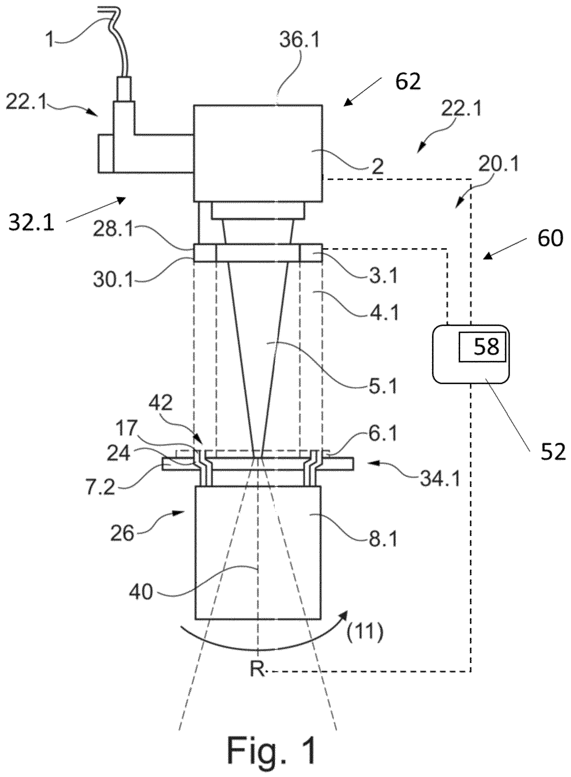

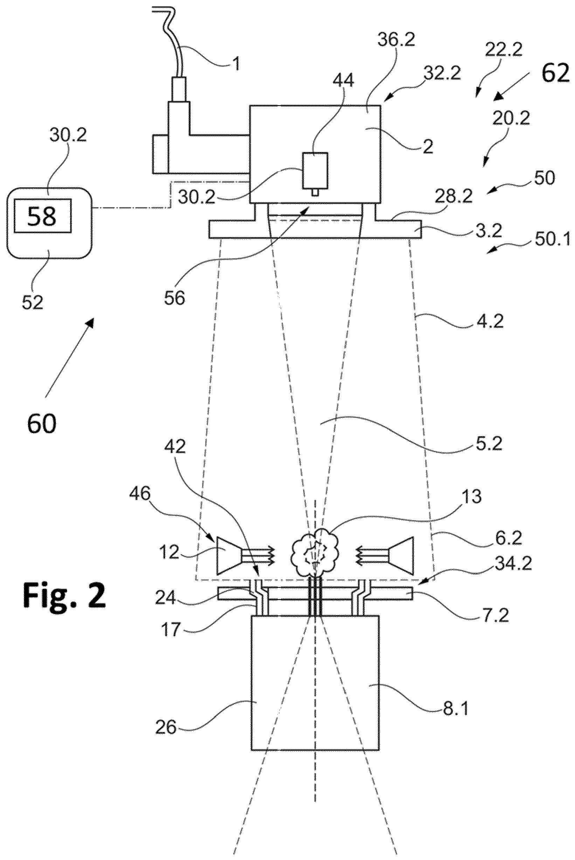

Im Folgenden werden anhand der Fig. 1 und 2 Ausführungsbeispiele für eine Vorrichtung 22.1, 22.2 zum Verschweißen von Leiterenden 24 im Zuge einer Serienfertigung für ein Bauteil 26 einer elektrischen Maschine erläutert. Die Leiterenden 24 sind an dem Bauteil 26 in einer Leiterendenanordnung angeordnet. Die Vorrichtung 22.1, 22.2 weist eine Positionsbestimmungseinrichtung 60 zum Bestimmen der Position von vorbestimmten zu verschweißenden Leiterenden 24 der Leiterendenanordnung auf. Die Positionsbestimmungseinrichtung 60 weist eine berührungslose Erfassungseinrichtung 30.1, 30.2 zum Erfassen der Position und eine computerimplementierte Auswerteinrichtung 58 auf. Weiter weist die Vorrichtung 22.1, 22.2 eine Schweißeinrichtung 62 auf, die dazu eingerichtet ist, ein Schweißmittel an den zu verschweißenden Leiterenden 24 in Abhängigkeit von der durch die Positionsbestimmungseinrichtung 60 bestimmten Position anzuordnen.

Im Folgenden werden Ausführungsbeispiele der Vorrichtung 22.1, 22.2 beschrieben, bei der die berührungslose Erfassungseinrichtung 30.1, 30.2 eine kamerabasierte optische Erfassungseinrichtung ist und bei der die Schweißeinrichtung 62 eine Lasereinrichtung 32.1, 32.2 ist, die einen Laserstrahl 5.1, 5.2 als Schweißmittel auf die zu verschweißenden Leiterenden 24 richtet. Bei anderen, hier nicht dargestellten Ausführungsformen ist die Schweißeinrichtung 62 als Elektronenstrahlschweißeinrichtung ausgebildet, wobei die berührungslose Erkennungseinrichtung mittels Elektronenstrahlrasterung arbeitet, siehe [4]. Bei anderen Ausgestaltungen ist die Schweißeinrichtung 62 eine WIG-Schweißeinrichtung mit Elektroden, die mittels gesteuerter Bewegungsmechanismen an den zu verschweißenden Leiterenden 24 angeordnet werden können.

In den Fig. 1 und 2 sind zwei Ausführungsbeispiele für eine Schweißanordnung 20.1, 20.2 dargestellt.

Die Schweißanordnung 20.1, 20.2 umfasst jeweils die Vorrichtung 22.1, 22.2 zum Verschweißen von Leiterenden 24, die aus einem Bauteil 26 vorstehen, sowie das zu bearbeitende Bauteil 26.

Bei einem bevorzugten Ausführungsbeispiel ist das Bauteil 26 ein Stator 8.1 eines als Fahrmotor für Kraftfahrzeuge zu verwendenden Elektromotors. Der Stator 8.1 wird gemäß einem Herstellverfahren, wie es im Einzelnen in der Literaturstelle [5] beschrieben und gezeigt ist, hergestellt. Die hier beschriebenen Vorrichtungen 22.1, 22.2 dienen zum Durchführen des in dieser Literaturstelle beschriebenen Schweißvorganges zum Verbinden von Leiterenden 24, die aus dem Stator 8.1 vorstehen, um so Spulenwicklungen des Stators zu bilden. Die Leiterenden 24 sind insbesondere die freien Enden von Hairpins 17, welche in Nuten eines Gehäuses des Stators 8.1 eingeführt worden sind. Entsprechend werden die Leiterenden 24 auch als Pins bezeichnet, ein Paar von miteinander zu verschweißenden Leiterenden 24 wird auch als Pinpaar bezeichnet.

Die Vorrichtung 22.1, 22.2 weist eine Beleuchtungseinrichtung 28.1, 28.2, eine optische Erkennungseinrichtung 30.1, 30.2, eine Lasereinrichtung 32.1, 32.2 und eine Halterung 34.1, 34.2 auf.

Die Beleuchtungseinrichtung 28.1, 28.2 dient zum Beleuchten von Leiterenden 24. Sie kann beispielsweise ein Ringlicht 3.1 mit einem Lichtkegel 4.1 oder ein Flächenlicht 3.2 mit einem Lichtkegel 4.2 aufweisen.

Die berührungslose Erkennungseinrichtung 30.1, 30.2 ist bei den dargestellten Ausführungsbeispielen als optische Erkennungseinrichtung dazu ausgebildet, durch die Beleuchtungseinrichtung 28.1, 28.2 beleuchtete Leiterenden 24 in einer Leiterendenanordnung 42 zu erkennen und deren Position in einem Koordinatensystem zu erfassen. Bei einigen Ausführungsformen ist hierzu eine Bildauswertung an einem Kamerabild - Kamer 44 - vorgesehen. Einige Ausführungsformen nutzen OCT für die Positionserfassung. Wie oben bereits erläutert, kann bei anderen Ausführungsformen der berührungslosen Erkennungseinrichtung 30.1, 30.2 auch eine Abtastung mittels Elektronenstrahl für die Positionserfassung durchgeführt werden.

Bei den dargestellten Ausführungsformen ist die Lasereinrichtung 32.1, 32.2 dazu ausgebildet, einen Laserstrahl 5.1, 5.2 abhängig von der erfassten Position auf die Leiterenden 24 zu richten, um so das Verschweißen der Leiterenden 24 durchzuführen. Bei einigen Ausführungen wird Laserlicht von einem nicht dargestellten Laser durch ein Lichtleitkabel 1 zu einer Laseroptik 2 geleitet. Zum Lenken des Laserstrahls 5.1, 5.2 weist die Lasereinrichtung 32.1, 32.2 eine Scaneinrichtung 36.1, 36.2 auf.

Die Halterung 34.1, 34.2 dient zum Halten des Bauteils 26 und der Leiterenden 24 während des Schweißvorganges. Hierzu weist die Halterung 34.1, 34.2 als Schweißschablone eine Spannvorrichtung 7.2 auf. Die Halterung 34.1 kann relativ zu der Schweißeinrichtung 62 beispielsweise durch Rotation um eine Achse 40 in eine Rotationsrichtung 11 beweglich sein, um Schweißmittel - d.h. z.B. Laserstrahl 5.1, 5.2 - und Leiterenden 24 relativ zueinander zu positionieren, oder auch stationär ausgebildet sein, wobei die relative Positionierung allein durch Bewegung der Schweißmittel - z.B. Richten des Laserstrahls 5.2 - erfolgt.

Weiter kann die Vorrichtung 2.1, 22.2 eine Strömungserzeugungseinrichtung 46 zum Erzeugen eines Luftvorhanges 6.1, 6.2, beispielsweise mit Luftdüse 12, aufweisen, um Schmauch 13 zu entfernen.

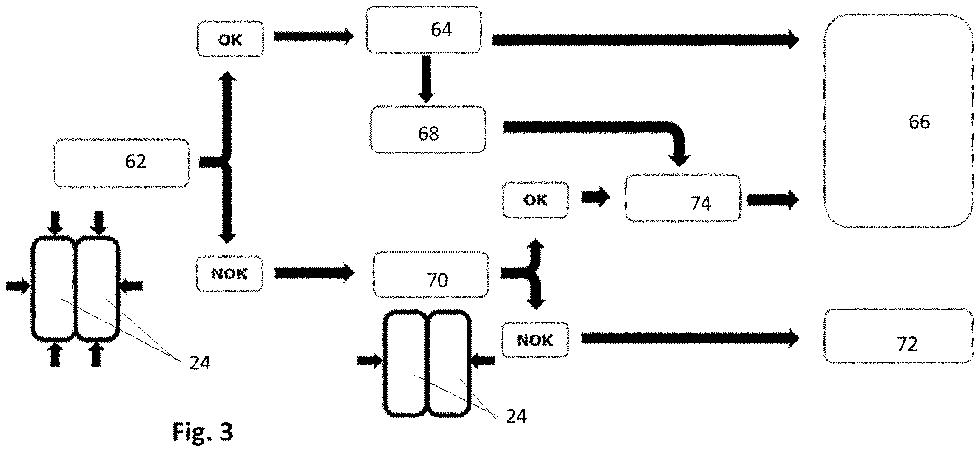

Die Auswerteeinrichtung 58 kann Teil einer computerimplementierten Steuerung 52 der Vorrichtung 22.1, 22.2 sein, die einen Prozessor und einen Speicher aufweist, in dem wenigstens ein Computerprogramm zur Steuerung und Auswertung gespeichert sind. Insbesondere weist das Computerprogramm Anweisungen auf, die die Vorrichtung 22.1, 22.2 dazu veranlassen, ein Schweißverfahren durchzuführen, von dem bevorzugte Ausführungsformen im Folgenden anhand der Fig. 3 näher erläutert werden. Bei einigen Ausführungsformen ist die Auswerteeinrichtung 58 zum Durchführen einer Bildanalyse eines Bildes der gesamten Leiteranordnung 42 oder eines Teilbereichs davon eingerichtet, um z.B. durch Kantendetektion die Positionen der einzelnen zu verschweißenden Leiterenden 24, insbesondere einzelner Pinpaare, zu erfassen.

Das Schweißverfahren wird im Zuge der Serienfertigung für ein Bauteil einer elektrischen Maschine, wie insbesondere einem Hairpin-Stator 8.1, 8.2 durchgeführt, um die Leiterenden 24 - Enden der Hairpins 17 -, die an dem Bauteil in einer Leiteranordnung 42 angeordnet sind, zu verschweißen. Insbesondere bei Hairpin-Statoren müssen eine große Anzahl von Leiterendenpaaren verschweißt werden, um die Spulenwicklung aus einzeln eingesteckten Hairpins 17 herzustellen.

Das Schweißverfahren umfasst die Schritte:
A) Bestimmen einer Position von vorbestimmten zu verschweißenden Leiterenden 24 der Leiterendenanordnung 42 und
B) Anordnen eines Schweißmittels abhängig von der in Schritt A) bestimmten Position an den zu verschweißenden Leiterenden.

Der Schritt A) des Bestimmens der Position umfasst zunächst den Schritt:
a) Durchführen einer berührungslosen Positionserkennung mit dem Ziel, die Position der zu verschweißenden Leiterenden 24 der Leiterendenanordnung 42 zu erfassen.

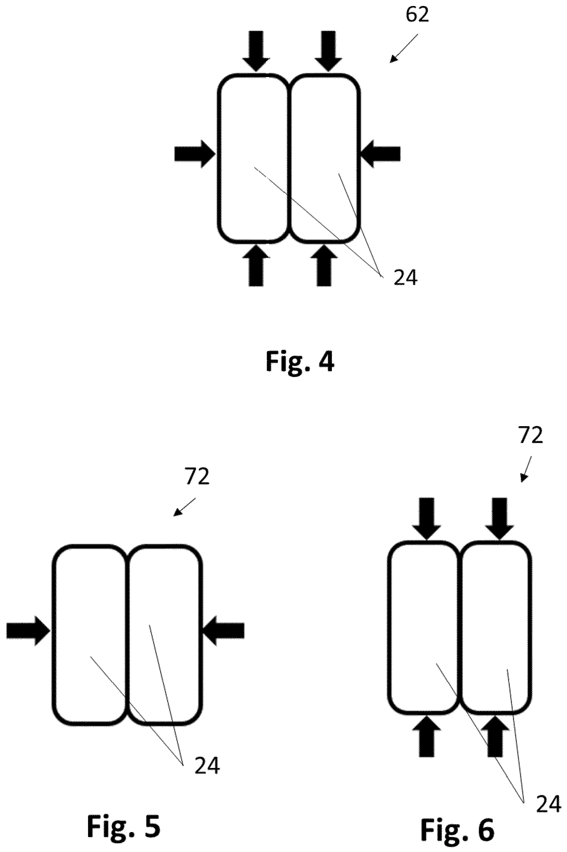

Wie man Fig. 3 und 4 entnehmen kann, wird zunächst eine Detektion 62 der Leiterenden 24 durchgeführt. Dies geschieht beispielsweise optisch, z.B. mit einer Kamera 44 und Bildauswertung, z.B. Kantendetektion. Auch die Durchführung einer optischen Kohärenztomografie (OCT) ist möglich. Insbesondere wenn eine Elektronenstrahlschweißeinrichtung verwendet wird, kann auch ein Rastern mittels des Elektronenstrahls erfolgen, um die Position zu bestimmen. Fig. 4 zeigt ein Beispiel für eine kamerabasierte Detektion 62. Dabei wird ein Bild der des Leiterendengruppe oder der gesamten oder eines Teilbereichs der Leiterendenanordnung 42 aufgenommen. In der Auswerteeinheit 58 erfolgt eine Detektion aller Außenkanten zur Bestimmung der Position der jeweiligen zu verschweißenden Leiterenden 24 in der Länge und der Breite. Somit werden Koordinaten für jedes zu verschweißende Leiterendenpaar (Pinpaar) erhalten.

Anschließend wird überprüft, ob das Ergebnis der Detektion 62 in Ordnung (OK) oder nicht in Ordnung (NOK) ist. Das Ergebnis der Detektion 62 ist insbesondere dann nicht in Ordnung, wenn für die Leiterenden 24 (z.B. für eines der Vielzahl von Leiterendenpaaren) keine Position erfasst worden ist oder wenn eine für die jeweiligen Leiterenden 24 erfasste Position außerhalb eines vorbestimmten Toleranzbereichs liegt.

Wenn das Ergebnis der Detektion 62 in Ordnung ist, werden die Pinpaar-Koordinaten 64 zum Schweißen 66 verwendet. Außerdem werden die Pinpaar-Koordinaten in einem Koordinatenspeicher 68 für nachfolgende Schweißvorgänge gespeichert. Dieser Vorgang wird bei jeder korrekten Erfassung eines jeden zu schweißenden Leiterendenpaars wiederholt.

In dem Koordinatenspeicher 68 sind dann für jede zu schweißende Leiterendengruppe (wie insbesondere jedes Leiterendenpaar) die Koordinaten von korrekten Detektionen aus vorherigen Schweißvorgängen für vorher bearbeitete Bauteile der gleichen Serie gespeichert.

Ist das Ergebnis der Detektion 62 nicht in Ordnung (NOK) wird optional eine Existenzprüfung 70 durchgeführt. Dabei wird mit einer weniger aufwändigen Erfassung geprüft, ob dasjenige Leiterendenpaar, dessen Position nicht korrekt erfasst worden ist, überhaupt vorhanden ist. Ist das Ergebnis der Existenzprüfung 70 nicht korrekt (NOK), wird das Bauteil ausgesondert, z.B. als Schrott 72.

Die Fig. 5 und 6 zeigen Beispiele für die Existenzprüfung 70. Bei der Existenzprüfung 70 wird eine ähnliche Erfassung wie bei der Detektion 62 durchgeführt, allerdings in einer simpleren Form. Insbesondere erstreckt sich die Erfassung nur eine Dimension, z.B. die Breite wie in Fig. 5 gezeigt oder die Länge wie in Fig. 6 gezeigt. Auch wird keine quantitative Erfassung weiterverarbeitet, eine JA/NEIN-Antwort reicht. Z.B. wird bei einigen Ausführungsformen zwar eine quantitative Messung durchgeführt, um zu bewerten, ob die gemessene Diemsion dem vorgegebenen Wert zuzüglich Toleranz entspricht, weiterverarbeitet wird jedoch nur eine JA/NEIN-Antwort.

Gemäß Fig. 3, auf die nun wiederum Bezug genommen wird, erfolgt dann, wenn die Existenzprüfung in Ordnung (OK) ist oder, wenn keine Existenzprüfung vorgesehen ist, direkt auf eine nicht korrekte Detektion 62 folgend, eine Mittelwertbildung 74, bei der ein Mittelwert der jeweiligen Koordinate aus dem Koordinatenspeicher 68 gebildet wird. Dieser Mittelwert wird dann anstelle der nicht korrekt erfassten Koordinate für den Schweißvorgang für dieses Leiterendenpaar herangezogen.

Schritt A) umfasst somit bei Ausführungsformen des Schweißverfahrens die Schritte:
a) Durchführen einer berührungslosen Positionserkennung mit dem Ziel, die Position der zu verschweißenden Leiterenden 24 der Leiterendenanordnung 42 zu erfassen,
b) falls in Schritt a) die Position erfasst worden ist, Bestimmen der erfassten Position als Position für das Durchführen von Schritt B) und Speichern der erfassten Position für die vorbestimmten Leiterenden 24; und
c) falls in Schritt a) die Position nicht erfasst worden ist, Bestimmen der Position für das Durchführen von Schritt B) aufgrund zumindest einer zuvor für die vorbestimmten zu verschweißenden Leiterenden 24 gespeicherten Position.

In vorteilhafter Ausgestaltung geht jede neu in Schritt b) erfasste und abgespeicherte Position in eine (damit fortlaufende) Mittelwertbildung 74 ein.

Bei anderen Ausführungsformen wird der Mittelwert nur einmalig aus einer anfänglichen Stichprobe (z.B. die ersten 30 Statoren) ermittelt. Der Koordinatenspeicher enthält somit nur die korrekt erfassten Positionen aller zu verschweißenden Leiterenden für eine anfängliche Stichprobe. Auch andere Mittelwertbildungen sind möglich, z.B. Speichern bei jedem n. Stator, Speichern nur jeweils der letzten n Statoren (n = eine natürliche Zahl) in einem Schiebespeicher usw.

Zusammenfassend werden bei der dargestellten Ausführungsform des Schweißverfahrens die Koordinaten als "OK" detektierter Bauteile/Drahtenden gespeichert und Mittelwerte für die jeweiligen Positionen berechnet. NOK-Detektionen (NOK= nicht in Ordnung) werden automatisch verworfen. Bei einigen Ausführungsformen wird im Falle einer fehlgeschlagenen Detektion bekannter Lösungen (Kamera/OCT/oder auch Erfassung mit Elektronenstrahl bei Elektronenstrahlschweißen, siehe [4]) auf neu detektierte Koordinaten verzichtet und der Schweißprozess anhand der gespeicherten Mittelwerte positioniert (=Blindschweißung). So kann eine "Detektionsrate" (Schweißrate) von 100% erreicht werden.

Das Verfahren kann mit einer der Vorrichtungen 22.1, 22.2 wie in Fig. 1 oder 2 dargestellt durchgeführt werden, aber auch mit anderen Vorrichtungen, die Positionen erfassen und anhand der Positionserfassung eine Schweißung durchführen. Hierzu ist die Auswertung der Positionserfassung entsprechend abzuändern.

Es ist ein im Zuge der Serienfertigung für ein Bauteil einer elektrischen Maschine durchzuführendes Verfahren zum Verschweißen von Leiterenden (24), die an dem Bauteil in einer Leiterendenanordnung (42) angeordnet sind, beschrieben worden mit den Schritten:
A) Bestimmen einer Position von vorbestimmten zu verschweißenden Leiterenden (24) der Leiterendenanordnung (42) und
B) Anordnen eines Schweißmittels abhängig von der in Schritt A) bestimmten Position an den zu verschweißenden Leiterenden (24). Um das Schweißverfahren hinsichtlich Aufwands und Genauigkeit zu verbessern, wird Schritt A) mit den Schritten durchgeführt:
   a) Durchführen einer berührungslosen Positionserkennung (62) mit dem Ziel, die Position der zu verschweißenden Leiterenden (24) der Leiterendenanordnung (42) zu erfassen,
   b) falls in Schritt a) die Position erfasst worden ist, Bestimmen der erfassten Position (64) als Position für das Durchführen von Schritt B) und Speichern (68) der erfassten Position für die vorbestimmten Leiterenden (24); und
   c) falls in Schritt a) die Position nicht erfasst worden ist, Bestimmen der Position für das Durchführen von Schritt B) aufgrund zumindest einer zuvor für die vorbestimmten zu verschweißenden Leiterenden (24) gespeicherten Position.

Außerdem sind Vorrichtungen 22.1, 22.2, eine Steuerung 52 und ein Computerprogramm zum Durchführen des Verfahrens beschrieben worden.

### Bezugszeichenliste:

- 1: Lichtleitkabel
- 2: Laseroptik (Scanner)
- 3.1: Ringlicht
- 3.2: Flächenlicht
- 4.1: Lichtkegel Ringlicht
- 4.2: Lichtkegel Flächenlicht
- 5.1: Laserstrahl
- 5.2: Laserstrahl
- 6.1: Luftvorhang
- 6.2: Luftvorhang
- 7.2: Spannvorrichtung
- 8.1: Stator
- 11: Rotationsrichtung
- 12: Luftdüse
- 13: Rauchgas / Schmauch
- 17: Hairpins
- 20.1: Schweißanordnung
- 20.2: Schweißanordnung
- 22.1: Vorrichtung
- 22.2: Vorrichtung
- 24: Leiterenden
- 26: Bauteil
- 28.1: Beleuchtungseinrichtung
- 28.2: Beleuchtungseinrichtung
- 30.1: optische Erkennungseinrichtung
- 30.2: optische Erkennungseinrichtung
- 32.1: Lasereinrichtung
- 32.2: Lasereinrichtung
- 34.1: Halterung
- 34.2: Halterung
- 36.1: Scaneinrichtung
- 36.2: Scaneinrichtung
- 40: zentrale Achse
- 42: Leiterendenanordnung
- 44: Kamera
- 46: Strömungserzeugungseinrichtung
- 52: Steuerung
- 58: Auswerteeinrichtung
- 60: Positionsbestimmungseinrichtung
- 62: Detektion
- 64: Pinpaar-Koordinaten
- 68: Koordinatenspeicher
- 70: Existenzprüfung
- 72: Schrott
- 74: Mittelwertbildung

## Patentansprüche

1. Im Zuge der Serienfertigung für ein Bauteil einer elektrischen Maschine durchzuführendes Verfahren zum Verschweißen von Leiterenden (24), die an dem Bauteil in einer Leiterendenanordnung (42) angeordnet sind, umfassend:
A) Bestimmen einer Position von vorbestimmten zu verschweißenden Leiterenden (24) der Leiterendenanordnung (42) und
B) Anordnen eines Schweißmittels abhängig von der in Schritt A) bestimmten Position an den zu verschweißenden Leiterenden (24);
wobei Schritt A) umfasst:
a) Durchführen einer berührungslosen Positionserkennung (62) mit dem Ziel, die Position der zu verschweißenden Leiterenden (24) der Leiterendenanordnung (42) zu erfassen,
b) falls in Schritt a) die Position erfasst worden ist, Bestimmen der erfassten Position (64) als Position für das Durchführen von Schritt B) und Speichern (68) der erfassten Position für die vorbestimmten Leiterenden (24); und
c) falls in Schritt a) die Position nicht erfasst worden ist, Bestimmen der Position für das Durchführen von Schritt B) aufgrund zumindest einer zuvor für die vorbestimmten zu verschweißenden Leiterenden (24) gespeicherten Position.

2. Verfahren nach Anspruch 1, wobei Schritt a) wenigstens einen oder mehrere der Schritte umfasst:
a1) Durchführen einer optischen Positionserkennung;
a2) Durchführen einer kamerabasierten Positionserkennung;
a3) Aufnahme eines Bildes zumindest eines Teilbereichs der Leiteranordnung (42) und Durchführen einer Bildverarbeitung zur Erfassung der Position von zu verschweißenden Leiterendengruppen;
a4) Durchführen einer kamerabasierten Detektion der Position von Leiterendengruppen mittels Kantendetektion basierend auf Kontrastunterschied;
a5) Aufnahme eines Kamerabildes und Suche eines trainierten Musters, insbesondere basierend auf Kontrastunterschied;
a6) Durchführen einer optischen Kohärenztomografie (OCT);
a7) Detektion mittels Elektronenstrahl.

3. Verfahren nach einem der voranstehenden Ansprüche, wobei Schritt c) anstelle von Schritt b) durchgeführt wird,
3.1 wenn in Schritt a) keine Position erfasst worden ist und/oder
3.2 wenn eine in Schritt a) erfasste Position außerhalb eines vorbestimmten Toleranzbereichs liegt.

4. Verfahren nach einem der voranstehenden Ansprüche, wobei Schritt b) wenigstens einen oder mehrere der Schritte umfasst:
b1) Speichern der in Schritt a) korrekt erfassten Position für jede zu verschweißende Leiterendengruppe des Bauteils;
b2) Speichern der in Schritt a) für die vorbestimmte Leiterendengruppe erfassten Position bei jedem Bauteil einer Bauteilserie;
b3) Speichern jeder Koordinate der in Schritt a) erfassten Position;
b4) Speichern der in Schritt a) korrekt erfassten Position für nachfolgende Schweißvorgänge von weiteren Bauteilen der gleichen Serie.

5. Verfahren nach einem der voranstehenden Ansprüche, wobei Schritt c) wenigstens einen oder mehrere der Schritte umfasst:
c1) Bilden eines Mittelwerts von bei vorherigen Schweißverfahren zum Schweißen der gleichen Leiterenden (24) der Leiterendenanordnung (42) anderer Bauteile der gleichen Serie gespeicherten Positionen;
c2) Bilden eines Mittelwerts für jede Koordinate der Position aus zuvor bei anderen Bauteilen der gleichen Serie für die vorbestimmten Leiterenden (24) gespeicherten Koordinaten;
c3) fortlaufendes Bilden eines Mittelwerts der Position.

6. Verfahren nach einem der voranstehenden Ansprüche, umfassend den Schritt:
d) Durchführen einer Existenzprüfung (70) zum Bestimmen, ob die vorbestimmten zu verschweißenden Leiterenden (24) vorhanden sind.

7. Verfahren nach Anspruch 6, wobei Schritt d)
7.1 durchgeführt wird, wenn in Schritt a) die Position nicht erfasst worden ist; und/oder
7.2 vor Schritt c) durchgeführt wird; und/oder
7.3 Erfassen nur einer Dimension einer Leiterendengruppe mit zu verschweißenden Leiterenden (24) umfasst; und/oder
7.4 Erfassen eines Querschnitts einer sichtbaren Fläche der Leiterenden (24) umfasst; und/oder
7.5 lediglich eine JA oder NEIN Information liefert.

8. Verfahren nach einem der Ansprüche 6 oder 7, umfassend Aussondern des Bauteils, wenn in Schritt d) bestimmt wird, dass die zu verschweißenden Leiterenden (24) nicht vorhanden sind.

9. Verfahren nach einem der voranstehenden Ansprüche, wobei Schritt B) wenigstens einen der folgenden Schritte umfasst:
B1) Richten eines Schweißstrahls abhängig von der in Schritt a) bestimmten Position auf die zu verschweißenden Leiterenden (24);
B2) Richten eines Elektronenstrahls abhängig von der in Schritt a) bestimmten Position auf die zu verschweißenden Leiterenden (24);
B3) Anordnen wenigstens einer Elektrode zum WIG-Schweißen abhängig von der in Schritt a) bestimmten Position an den zu verschweißenden Leiterenden.

10. Vorrichtung (22.1, 22.2) zum Verschweißen von Leiterenden (24) im Zuge einer Serienfertigung für ein Bauteil einer elektrischen Maschine, wobei die Leiterenden (24) an dem Bauteil in einer Leiterendenanordnung (42) angeordnet sind, wobei die Vorrichtung (22.2, 22.2) umfasst:
eine Positionsbestimmungseinrichtung (60) zum Bestimmen der Position von vorbestimmten zu verschweißenden Leiterenden (24) der Leiterendenanordnung (42), wobei die Positionsbestimmungseinrichtung (60) eine berührungslose Erfassungseinrichtung (30.1, 30.2) zum Erfassen der Position und eine computerimplementierte Auswerteinrichtung (58) mit einem Speicher aufweist, und
eine Schweißeinrichtung (62), die dazu eingerichtet ist, ein Schweißmittel an den zu verschweißenden Leiterenden (24) in Abhängigkeit von der durch die Positionsbestimmungseinrichtung (60) bestimmten Position anzuordnen;
wobei die Auswerteinrichtung (58) zum Durchführen der folgenden Schritte eingerichtet ist:
a) Durchführen einer berührungslosen Positionserkennung (62) mit dem Ziel, die Position der zu verschweißenden Leiterenden (24) der Leiterendenanordnung (42) zu erfassen,
b) falls in Schritt a) die Position erfasst worden ist, Bestimmen der Position als die erfasste Position und Speichern (68) der erfassten Position für die vorbestimmten Leiterenden (24); und
c) falls in Schritt a) die Position nicht erfasst worden ist, Bestimmen der Position aufgrund zumindest einer zuvor für die vorbestimmten zu verschweißenden Leiterenden (24) gespeicherten Position.

11. Vorrichtung (22.1, 22.2) nach Anspruch 10, wobei die berührungslose Erfassungseinrichtung (30.1, 30.2) eingerichtet ist zum Durchführen wenigstens eines oder mehrere der Schritte
a1) Durchführen einer optischen Positionserkennung;
a2) Durchführen einer kamerabasierten Positionserkennung;
a3) Aufnahme eines Bildes zumindest eines Teilbereichs der Leiteranordnung (42) und Durchführen einer Bildverarbeitung zur Erfassung der Position von zu verschweißenden Leiterendengruppen;
a4) Durchführen einer kamerabasierten Detektion der Position von Leiterendengruppen mittels Kantendetektion basierend auf Kontrastunterschied;
a5) Aufnahme eines Kamerabildes und Suche eines trainierten Musters, insbesondere basierend auf Kontrastunterschied;
a6) Durchführen einer optischen Kohärenztomografie (OCT);
a7) Detektion mittels Elektronenstrahl.

12. Vorrichtung (22.1, 22.2) nach einem der Ansprüche 10 oder 11, wobei
12.1 die Schweißeinrichtung (62) ausgewählt ist aus der Gruppe, die eine Lasereinrichtung (32.1, 32.2) zum Richten eines Laserschweißstrahls (5.1, 5.2) auf die zu verschweißenden Leiterenden (24), eine Elektronenstrahlschweißeinrichtung zum Richten eines Elektronenstrahls auf die zu verschweißenden Leiterenden und eine WIG-Schweißeinrichtung, die dazu eingerichtet ist, wenigstens eine Elektrode abhängig von der Positionserkennung an den zu verschweißenden Leiterenden (24) anzuordnen, umfasst; und/oder
12.2 die Auswerteinrichtung (58) dazu eingerichtet ist, die Schritte eines oder mehrerer der Ansprüche 1 bis 9 durchzuführen.

13. Steuerung (52) für eine Vorrichtung (22.1, 22.2) nach einem der Ansprüche 10 bis 12, dazu eingerichtet, die Vorrichtung (22.2, 22.2) zum Durchführen des Verfahrens nach einem der Ansprüche 1 bis 9 anzusteuern.

14. Vorrichtung (22.1, 22.2) nach einem der Ansprüche 10 bis 12 mit einer Steuerung (52) nach Anspruch 13.

15. Computerprogramm umfassend Anweisungen, die eine Vorrichtung (22.2, 22.2) nach einem der Ansprüche 10 bis 12 oder 14 dazu veranlassen, das Verfahren nach einem der Ansprüche 1 bis 9 durchzuführen.

## Claims

1. Method to be carried out in the course of series production of a component of an electrical machine, for welding conductor ends (24) that are disposed on the component in a conductor end arrangement (42), the method comprising:
A) determining a position of predetermined conductor ends (24) of the conductor end arrangement (42) to be welded, and
B) arranging a welding means at the conductor ends (24) to be welded, in dependence on the position determined in step A);
wherein step A) comprises:
a) performing a non-contact position detection (62) with the aim of detecting the position of the conductor ends (24) of the conductor end arrangement (42) to be welded,
b) if the position has been detected in step a), determining the detected position (64) as the position for performing step B) and storing (68) the detected position for the predetermined conductor ends (24); and
c) if the position has not been detected in step a), determining the position for carrying out step B) on the basis of at least one position previously stored for the predetermined conductor ends (24) to be welded.

2. Method according to claim 1, wherein
step a) comprises at least one or more of the steps:
a1) performing an optical position detection;
a2) performing a camera-based position detection;
a3) recording an image of at least a sub-region of the conductor arrangement (42) and carrying out image processing to determine the position of groups of conductor ends to be welded;
a4) carrying out a camera-based detection of the position of groups of conductor ends by means of edge detection based on contrast difference;
a5) recording a camera image and searching for a trained pattern, in particular based on contrast difference;
a6) performing an optical coherence tomography (OCT);
a7) detection by means of an electron beam.

3. Method according to any one of the preceding claims, wherein
step c) is performed instead of step b)
3.1 if no position has been detected in step a) and/or
3.2 if a position detected in step a) is outside a predetermined tolerance range.

4. Method according to any one of the preceding claims, wherein step b) comprises at least one or more of the steps:
b1) storing the position correctly detected in step a) for each group of conductor ends of the component to be welded;
b2) storing the position detected in step a) for the predetermined group of conductor ends for each component of a component series;
b3) storing each coordinate of the position detected in step a);
b4) storing the position correctly detected in step a) for subsequent welding processes of further components of the same series.

5. Method according to any one of the preceding claims, wherein
step c) comprises at least one or more of the steps:
c1) taking an average of positions stored during previous welding processes for welding the same conductor ends (24) of the conductor end arrangement (42) of other components of the same series;
c2) taking an average for each coordinate of the position from the coordinates previously stored for the predetermined conductor ends (24) of other components of the same series;
c3) continuous averaging of the position.

6. Method according to any one of the preceding claims, comprehensive the step of:
d) performing a presence check (70) to determine whether the predetermined conductor ends (24) to be welded are present.

7. Method according to claim 6, wherein step d)
7.1 is performed if the position has not been detected in step a); and/or
7.2 is performed before step c); and/or
7.3 comprises detecting only one dimension of a group of conductor ends including conductor ends (24) to be welded; and/or
7.4 comprises detecting a cross section of a visible surface of the conductor ends (24); and/or
7.5 provides only YES or NO information.

8. Method according to any one of claims 6 or 7, comprehensive rejecting the component if it is determined in step d) that the conductor ends (24) to be welded are not present.

9. Method according to any one of the preceding claims, wherein step B) comprises at least one of the following steps:
B1) directing a welding beam onto the conductor ends (24) to be welded, in dependence on the position determined in step a);
B2) directing an electron beam onto the conductor ends (24) to be welded, in dependence on the position determined in step a);
B3) arranging at least one electrode for TIG welding at the conductor ends to be welded, in dependence on the position determined in step a).

10. Device (22.1, 22.2) for welding conductor ends (24) in the course of series production for a component of an electrical machine, the conductor ends (24) being disposed on the component in a conductor end arrangement (42), the device (22.1, 22.2) comprising:
a position determination device (60) for determining the position of predetermined conductor ends (24) of the conductor end arrangement (42) to be welded, the position determining device (60) comprising a non-contact detection device (30.1, 30.2) for detecting the position and a computer-implemented evaluation device (58) with a memory, and
a welding device (62) configured to arrange a welding means at the conductor ends (24) to be welded, in dependence on the position determined by the position determination device (60); wherein
the evaluation device (58) is configured to carry out the following steps:
a) performing a non-contact position detection (62) with the aim of detecting the position of the conductor ends (24) of the conductor end arrangement (42) to be welded,
b) if the position has been detected in step a), determining the position as the detected position and storing (68) the detected position for the predetermined conductor ends (24); and
c) if the position has not been detected in step a), determining the position on the basis of at least one position previously stored for the predetermined conductor ends (24) to be welded.

11. Device (22.1, 22.2) according to claim 10, wherein
the non-contact detection device (30.1, 30.2) is configured to carry out at least one or more of the steps
a1) performing an optical position detection;
a2) performing a camera-based position detection;
a3) recording an image of at least a sub-region of the conductor arrangement (42) and carrying out image processing to detect the position of the groups of conductor ends to be welded;
a4) performing a camera-based detection of the position of groups of conductor ends by means of edge detection based on contrast difference;
a5) recording a camera image and searching for a trained pattern, in particular based on contrast difference;
a6) performing an optical coherence tomography (OCT);
a7) detection by means of an electron beam.

12. Device (22.1, 22.2) according to any one of claims 10 or 11, wherein
12.1 the welding device (62) is selected from the group comprising a laser device (32.1, 32.2) for directing a laser welding beam (5.1, 5.2) onto the conductor ends (24) to be welded, an electron beam welding device for directing an electron beam onto the conductor ends to be welded, and a TIG welding device which is configured to arrange at least one electrode at the conductor ends (24) to be welded, in dependence on the position detection; and/or 12.2 the evaluation device (58) is configured to perform the steps of one or more of claims 1 to 9.

13. Control unit (52) for a device (22.1, 22.2) according to any one of claims 10 to 12, configured to control the device (22.2, 22.2) to perform the method according to any one of claims 1 to 9.

14. Device (22.1, 22.2) according to any one of claims 10 to 12 comprising a control unit (52) according to claim 13.

15. Computer program including instructions that cause a device (22.2, 22.2) according to any one of claims 10 to 12 or 14 to perform the method according to any one of claims 1 to 9.

## Revendications

1. Procédé à mettre en œuvre en cours de la production en série d'un composant d'une machine électrique, pour souder des extrémités de conducteurs (24) qui sont disposées sur le composant dans un agencement d'extrémités de conducteurs (42), le procédé comprenant:
A) la détermination d'une position d'extrémités de conducteurs prédéterminées (24) de l'agencement d'extrémités de conducteurs (42) à souder, et
B) l'agencement d'un moyen de soudage au niveau des extrémités de conducteurs (24) à souder, en fonction de la position déterminée à l'étape A);
dans lequel l'étape A) comprend:
a) effectuer une détection de position sans contact (62) dans le but de détecter la position des extrémités de conducteurs (24) de l'agencement d'extrémités de conducteurs (42) à souder,
b) si la position a été détectée à l'étape a), déterminer la position détectée (64) comme étant la position pour effectuer l'étape B) et stocker (68) la position détectée pour les extrémités de conducteurs prédéterminées (24); et
c) si la position n'a pas été détectée à l'étape a), déterminer la position pour exécuter l'étape B) sur la base d'au moins une position précédemment stockée pour les extrémités de conducteurs prédéterminées (24) à souder.

2. Procédé selon la revendication 1, dans lequel
l'étape a) comprend au moins une ou plusieurs des étapes suivantes:
a1) effectuer une détection optique de position;
a2) effectuer une détection de position à l'aide d'une caméra;
a3) enregistrer une image d'au moins une sous-région de l'agencement de conducteurs (42) et effectuer un traitement d'image pour déterminer la position des groupes d'extrémités de conducteurs à souder;
a4) effectuer une détection à l'aide d'une caméra de la position des groupes d'extrémités de conducteurs au moyen d'une détection des bords basée sur la différence de contraste;
a5) enregistrer une image de caméra et rechercher un motif appris, en particulier sur la base d'une différence de contraste;
a6) effectuer une tomographie par cohérence optique (OCT);
a7) effectuer une détection au moyen d'un faisceau d'électrons.

3. Procédé selon l'une quelconque des revendications précédentes, dans lequel l'étape c) est effectuée à la place de l'étape b)
3.1 si aucune position n'a été détectée à l'étape a) et/ou
3.2 si une position détectée à l'étape a) se trouve en dehors d'une plage de tolérance prédéterminée.

4. Procédé selon l'une quelconque des revendications précédentes, dans lequel l'étape b) comprend au moins une ou plusieurs des étapes suivantes:
b1) stocker la position correctement détectée à l'étape a) pour chaque groupe d'extrémités de conducteurs du composant à souder;
b2) stocker la position détectée à l'étape a) pour le groupe prédéterminé d'extrémités de conducteurs pour chaque composant d'une série de composants;
b3) stocker chaque coordonnée de la position détectée à l'étape a);
b4) stocker la position correctement détectée à l'étape a) pour les processus de soudage ultérieurs d'autres composants de la même série.

5. Procédé selon l'une quelconque des revendications précédentes, dans lequel l'étape c) comprend au moins une ou plusieurs des étapes suivantes:
c1) calculer une moyenne des positions enregistrées lors des processus de soudage précédents pour souder les mêmes extrémités de conducteurs (24) de l'agencement d'extrémités de conducteurs (42) d'autres composants de la même série;
c2) calculer une moyenne pour chaque coordonnée de la position à partir des coordonnées précédemment enregistrées pour les extrémités de conducteurs prédéterminées (24) d'autres composants de la même série;
c3) calculer en continu la moyenne de la position.

6. Procédé selon l'une quelconque des revendications précédentes, comprenant l'étape:
d) effectuer un contrôle de présence (70) pour déterminer si les extrémités de conducteurs prédéterminées (24) à souder sont présentes.

7. Procédé selon la revendication 6, dans lequel l'étape d)
7.1 est effectuée si la position n'a pas été détectée à l'étape a); et/ou
7.2 est effectuée avant l'étape c); et/ou
7.3 comprend la détection d'une seule dimension d'un groupe d'extrémités de conducteurs comprenant les extrémités de conducteurs (24) à souder; et/ou
7.4 comprend la détection d'une section transversale d'une surface visible des extrémités de conducteurs (24); et/ou
7.5 fournit uniquement des informations OUI ou NON.

8. Procédé selon l'une quelconque des revendications 6 ou 7, comprenant le rejet du composant s'il est déterminé à l'étape d) que les extrémités de conducteurs (24) à souder ne sont pas présentes.

9. Procédé selon l'une quelconque des revendications précédentes, dans lequel l'étape B) comprend au moins l'une des étapes suivantes:
B1) diriger un faisceau de soudage sur les extrémités de conducteur (24) à souder, en fonction de la position déterminée à l'étape a);
B2) diriger un faisceau d'électrons sur les extrémités de conducteur (24) à souder, en fonction de la position déterminée à l'étape a);
B3) disposer au moins une électrode pour le soudage TIG au niveau des extrémités de conducteur à souder, en fonction de la position déterminée à l'étape a).

10. Dispositif (22.1, 22.2) pour souder des extrémités de conducteurs (24) au cours d'une production en série pour un composant d'une machine électrique, les extrémités de conducteurs (24) étant disposées sur le composant dans un agencement d'extrémités de conducteurs (42), le dispositif (22.1, 22.2) comprenant:
un dispositif de détermination de position (60) pour déterminer la position d'extrémités de conducteurs prédéterminées (24) de l'agencement d'extrémités de conducteurs (42) à souder,
le dispositif de détermination de position (60) comprenant un dispositif de détection sans contact (30.1, 30.2) pour détecter la position et un dispositif d'évaluation (58) mis en œuvre par ordinateur, et
un dispositif de soudage (62) configuré pour disposer un moyen de soudage au niveau des extrémités de conducteur (24) à souder, en fonction de la position déterminée par le dispositif de détermination de position (60);
dans lequel le dispositif d'évaluation (58) est configuré pour exécuter les étapes suivantes:
a) effectuer une détection de position sans contact (62) dans le but de détecter la position des extrémités de conducteur (24) de l'agencement d'extrémités de conducteur (42) à souder,
b) si la position a été détectée à l'étape a), déterminer la position comme étant la position détectée et stocker (68) la position détectée pour les extrémités de conducteur prédéterminées (24); et
c) si la position n'a pas été détectée à l'étape a), déterminer la position sur la base d'au moins une position précédemment mémorisée pour les extrémités de conducteurs prédéterminées (24) à souder.

11. Dispositif (22.1, 22.2) selon la revendication 10, dans lequel le dispositif de détection sans contact (30.1, 30.2) est configuré pour effectuer au moins une ou plusieurs des étapes suivantes
a1) effectuer une détection optique de position;
a2) effectuer une détection de position à l'aide d'une caméra;
a3) enregistrer une image d'au moins une sous-région de l'agencement de conducteurs (42) et effectuer un traitement d'image pour détecter la position des groupes d'extrémités de conducteurs à souder;
a4) effectuer une détection à l'aide d'une caméra de la position des groupes d'extrémités de conducteurs au moyen d'une détection des bords basée sur la différence de contraste;
a5) enregistrer une image de caméra et rechercher un motif appris, en particulier sur la base d'une différence de contraste;
a6) effectuer une tomographie par cohérence optique (OCT);
a7) effectuer une détection au moyen d'un faisceau d'électrons.

12. Dispositif (22.1, 22.2) selon l'une quelconque des revendications 10 ou 11, dans lequel
12.1 le dispositif de soudage (62) est choisi parmi le groupe comprenant un dispositif laser (32.1, 32.2) pour diriger un faisceau de soudage laser (5.1, 5.2) sur les extrémités de conducteur (24) à souder, un dispositif de soudage par faisceau d'électrons pour diriger un faisceau d'électrons sur les extrémités de conducteur à souder, et un dispositif de soudage TIG qui est configuré pour disposer au moins une électrode au niveau des extrémités de conducteur (24) à souder, en fonction de la détection de position; et/ou
12.2 le dispositif d'évaluation (58) est configuré pour exécuter les étapes d'une ou plusieurs des revendications 1 à 9.

13. Unité de commande (52) pour un dispositif (22.1, 22.2) selon l'une quelconque des revendications 10 à 12, configurée pour commander le dispositif (22.2, 22.2) afin d'exécuter le procédé selon l'une quelconque des revendications 1 à 9.

14. Dispositif (22.1, 22.2) selon l'une quelconque des revendications 10 à 12, comprenant une unité de commande (52) selon la revendication 13.

15. Programme informatique comprenant des instructions qui amènent un dispositif (22.2, 22.2) selon l'une quelconque des revendications 10 à 12 ou 14 à exécuter le procédé selon l'une quelconque des revendications 1 à 9.
